# EUROPEAN PATENT SPECIFICATION

(11) **EP 2 346 685 B1**
(45) Date of publication and mention of the grant of the patent: **11.12.2013**
(21) Application number: 09756769.7
(22) Date of filing: 29.10.2009
(51) Int. Cl.: B32B 27/30

(54) **POLYMERIC MULTI-LAYER SUBSTRATES**
POLYMERE MEHRLAGIGE SUBSTRATE
SUBSTRATS MULTICOUCHE POLYMÈRES

(30) Priority: 29.10.2008 GB 0819792
(43) Date of publication of application: 27.07.2011
(73) Proprietor: Evap Enviromentals Limited, Tadcaster, North Yorkshire LS24 8EW (GB)
(72) Inventor: IBBOTSON, Peter, Robert, Joseph, North Yorkshire LS24 8EP (GB)
(74) Representative: Wightman, David Alexander
(86) International application number: PCT/GB2009/002572
(87) International publication number: WO 2010/049690

(56) References cited:
- WO-A1-98/09812
- AT-B- 410 079

## Description

This invention concerns improvements in or relating to polymeric multi-layer substrates, the manufacture of such substrates, and their uses. More especially, the invention relates to biodegradable co-extruded polymeric multi-layer substrates containing a barrier layer of substantially polyvinyl alcohol, converted products derived therefrom, and processes required for manufacturing the multi-layer substrates and converted products. The converted products may be bags of any configuration, food trays, and lidding films for food trays, which find use in, for example, packaging fresh produce, fast food, fresh and cooked meat and fish, or sandwich packs or window packs or postal envelopes. Multi-layer substrates of thickness between 15 and 100µm will typically be converted into bags and lidding films and those of thickness between 100 and 1000µ will typically be converted into food trays.

Biodegradable is defined in this context as multi-layer substrates which will degrade by the action of naturally occurring micro-organisms, such as bacteria and fungi, over a period of time, leaving no toxic residues. Where the rate of degradation, by the action of naturally occurring micro-organisms such as bacteria and fungi, of the biodegradable multi-layer substrates described in this invention is sufficiently rapid, the substrates may additionally be certified as compostable according to internationally established standards such as EN13432 in Europe and ASTM-6400-99 in USA.

In our earlier application WO2008/132488, we have described an invention in which a biodegradable polymeric co-extruded multi-layer substrate consisting of outer layers substantially of polylactic acid (PLA) and inner layers substantially of polyvinyl alcohol (PVOH) are satisfactorily held together by tie layers consisting of blends of PLA and PVOH. The PVOH used in the above application for both the inner layers and as a component of the tie layers is described as preferably having a degree of hydrolysis of from 79 to 92%, more preferably from 80 to 88%, and a 'viscosity of from 3 to 32, and more preferably from 5 to 10 milli-pascal seconds (mPa.s) or centipoise (cP).

Further research has led to the present invention.

AT-A-410079 discloses a biodegradable flexible foil constructed of several layers of which the outer layer may be used for printing. The inner layer consists of water soluble polymers such as polyvinyl alcohol and the outer layer consists of polymers such as linear polyesters, linear polyester amides or linear polyamides.

WO-A-98/09812 discloses a biodegradable packaging laminate having an oxygen gas barrier layer (eg PVOH) between liquid tight layers (eg lactic acid). The layers may adhere directly to each other or a biodegradable adhesive layer may be provided. The adhesive layer may be ethylene vinyl acetate or polyvinyl acetate.

The present invention provides a biodegradable polymeric multi-layer substrate as defined in claim 1. Preferred features are defined in the dependent claims.

In one embodiment the at least one tie layer comprises a mixture of at least two different polymeric materials, wherein the melt flow index and/or melt viscosity of the at least two polymeric materials within the tie layer are similar.

In another embodiment the melt flow index and/or melt viscosity of the at least two polymeric materials within the tie layer are similar, and at least one of the polymeric materials within the tie layer and the same polymer(s) comprising one or other substrate layer adjacent the tie layer are different grades.

Preferably, the melt flow index and/or melt viscosity of said at least one of the polymeric materials within the tie layer approximates to the melt flow index and/or melt viscosity of another of the polymeric materials with the tie layer.

By matching the melt flow index and/or melt viscosity of the polymeric materials employed to form the at least one tie layer, the homogeneity of the tie layer may be enhanced and its bond to adjacent layers may be improved.

In one preferred embodiment, the first layer consists substantially of polylactic acid (PLA) - preferably at least 90% by weight of PLA - and the second layer consists substantially of polyvinyl alcohol (PVOH) - preferably at least 80% by weight of PVOH - with the at least one tie layer consisting substantially of a mixture of PLA and PVOH - preferably from 90% to 10% by weight PLA and from 10% to 90% by weight PVOH - wherein the melt flow index and/or melt viscosity of the PLA and PVOH within the at least one tie layer are similar whereas the melt flow index and/or melt viscosity of the PVOH contained within the second layer and the PVOH component of the at least one tie layer are significantly different.

The second layer substantially of PVOH typically provides tensile, puncture & tear strength and gas barrier properties to the multi-layer substrate as is illustrated by the following tables in which a commercially available mono-layer PLA substrate is compared with a multi-layer substrate according to this invention.

### Comparison of Physical Properties:

| **Material** | **Max stress (Mpa)** | **Elongation @ break %** | **E- modulus (Mpa)** | **Dart impact (grams)** |
|---|---|---|---|---|
| Natureworks® 2002D PLA mono-layer substrate | 60 - 68 | 4 - 6 | 2000 - 2200 | Too brittle to obtain result |
| Multi-layer substrate according to this invention | 36 - 38 | 120 - 150 | 1000 - 1200 | 100 - 200 |

### Comparison of Gas Barrier Properties

| Material | Oxygen transmission (cc/m².day) 25 micron | Moisture vapour transmission rate (grams/m².day) 25 micron |
|---|---|---|
| Natureworks® 2002D PLA mono-layer substrate | 550 | 325 |
| Multi layer substrate according to this invention | 6-8 | 200 - 300 |

Physical and Gas barrier properties of substantially PVOH mono-layer substrates are influenced by the degree of hydrolysis of the PVOH polymer as can be seen in the following tables:

| PVOH type | Degree of Hydrolysis | Oxygen permeability of 30µm film at 50% RH, (ml/m²/day) |
|---|---|---|
| Hot water-soluble | 98-99% | 0.24 |
| Warm water-soluble | 92-96% | 0.36 |
| Cold water-soluble | 88-92% | 1.85 |

| PVOH type | Degree of Hydrolysis | Tensile Strength, MPa | Elongation at Break, % | Elastic Modulus, MPa |
|---|---|---|---|---|
| Hot water-soluble | 98-99% | 50-90 | 100-180 | 120-200 |
| Warm water-soluble | 92-96% | 50-60 | 180-230 | 60-200 |
| Cold water-soluble | 88-92% | 45-50 | 200-250 | 20-90 |

As a component of a tie layer, the selected grade of PVOH is preferably as miscible as possible with the other substantial component, PLA, in order to improve the homogeneity of the blend of the two polymeric materials and thereby obtain a high degree of compatibility between them, especially when extruded as a blend, although this particular method of conversion is by no means limiting. Compatibility is therefore defined here as mixtures of the two polymers which after conversion, yield products having physical properties which can be exploited commercially.

High MFI's are associated with low melt viscosities. Film grade PVOH typically has a lower melt flow index and a higher melt viscosity than film grade PLA. We have found when mixing PVOH and PLA that this difference in the melt flow index and melt viscosity can give rise to problems for use of the PVOH/PLA mixture in a tie layer. We have surprisingly found that these problems can be overcome or significantly reduced by using a different grade of PVOH in the tie layer. More especially, we have found that by more closely matching the melt flow index and/or the melt viscosity of the PVOH and PLA in the mixture for the tie layer, we can achieve improved properties in the resultant product. This is believed to be due to the improved compatibility of the PVOH and PLA.

This improvement is demonstrated by the following example that compares the results of mixing PLA having a melt flow index (MFI) of between 4 and 8 g/10 min at 190°C and 2.16 kg, and a melt viscosity of 600 Pa-s at a shear rate of 500 sec⁻¹ at 190°C with different grades of PVOH compounded in a PVOH pellet containing at least 75% PVOH, the remainder being largely plasticisers such as glycerol and water. Compounded PVOH pellet grade D has proven to be suitable for good compatibility with PLA within a tie layer,

### EXAMPLE 1

| Material | Melt Flow Index (MFI) (g/10min at 190°C and 2.16kg) | Melt Viscosity (Pas) (shear rate of 500 sec⁻¹ at 190°C) | Appearance and performance in use |
|---|---|---|---|
| PLA | 4.0-8.0 | 600 | |
| Compounded PVOH pellet grade (A) | 1.4-1.9 | 1500 | When mixed with PLA the resulting film was hazy in appearance and too brittle for practical use |
| Compounded PVOH pellet grade (B) | 2.5-3.0 | 1600 | When mixed with PLA the resulting film was hazy in appearance and had slight brittleness in use |
| Compounded PVOH pellet grade (C) | PVOH. 35-39 | 1450 | When mixed with PLA the resulting film was slightly hazy in appearance and had slight brittleness in use |
| Compounded PVOH pellet grade (D) | 5.0-9.0 | 1200 | When mixed with PLA the resulting film was clear with good miscibility within tie layer and suitable for practical use |

As can be seen, mixing PLA with different grades of PVOH within a tie layer results in films having different properties and characteristics. Thus, PVOH grades A,B,C having a low MFI and a high melt viscosity compared to the PLA result in films that are hazy and exhibit varying degrees of brittleness in use due to inadequate compatibility with the PLA making them unsuitable for use as a tie layer. On the other hand, the mixture of PLA and PVOH grade D having an MFI closely matched to the MFI of the PLA and a lower melt viscosity than grades A,B,and C results in a film that is clear and exhibits little or no brittleness in use due to the improved compatibility within a tie layer between a first layer consisting essentially of PLA and a second layer consisting essentially of PVOH in accordance with the invention.

From another aspect, the present invention provides a biodegradable polymeric multi-layer substrate comprising a first layer of substantially PLA, a second layer of substantially PVOH, and at least one intermediate tie layer between the first and second layers comprising a mixture of PLA and PVOH, wherein the PVOH of the second layer has a melt flow index lower than the melt flow index of the PLA of the first layer and the PLA and PVOH components of the at least one tie layer each have a melt flow index equal to or greater than the melt flow index of the PLA of the first layer.

In a preferred embodiment, the PLA of the first layer has a melt flow index of 4 - 8 g/10min at 190°C and 2.16kg and the PVOH component of the at least one tie layer has a melt flow index of 5 - 9 g/10min at 190°C and 2.16kg. Preferably, the PLA of the first layer and the PLA component of the at least one tie layer have the same melt flow index.

In one embodiment, the present invention provides a biodegradable polymeric multi-layer substrate comprising a first layer of substantially PLA, a second layer of substantially PVOH, and at least one intermediate tie layer between the first and second layers comprising a mixture of PLA and PVOH, wherein the PVOH of the at least one tie layer has a higher MFI and a lower melt viscosity than the PVOH of the second layer.

In a preferred embodiment, the PVOH of the at least one tie layer has an MFI equal to or greater than the MFI of the PLA of the first layer. Preferably, the PLA of the at least one tie layer has an MFI equal to or greater than the MFI of the PLA of the first layer.

A potential consequence of lack of compatibility between the polymers contained within a tie layer is loss of interfacial adhesion which will affect the morphology and physical properties of the converted products.

In addition to matching as closely as possible the MFI and/or melt viscosities of the two polymers within the tie layer(s), we have found that it is desirable for the two polymers to be present in different amounts, i.e. to avoid 50/50 mixtures of the two polymers where possible, as blends containing the same amount of the two polymers have been found to produce the least homogeneous melt mixture and poor melt flow resulting in evidently incompatible features in the converted products. The incompatibility is particularly evident in loss of transparency of the converted products.

In the table below, we compare the haze and gloss of different transparent/translucent polyolefin substrates of 25µm thickness with the multi-layer structure according to this invention. It will be seen that the multi-layer structure according to this invention, unless coloured or pigmented by the incorporation of an appropriate masterbatch in an appropriate percentage into the extrusion mix, is more transparent than standard low density polyethylene (LDPE) but not quite as transparent as polypropylene (PP) and biaxially oriented polypropylene (BOPP).

| Property | PP | BOPP | LDPE | Multi-Layer Structure according to this invention |
|---|---|---|---|---|
| Haze (%) | 2 - 3.5 | 1 - 2 | 5+ | 4 |
| Gloss (%) | 86 - 89 | 88 - 92 | 75 - 80 | 80 |

One preferred embodiment of this invention incorporates a plurality of tie layers instead of a single tie layer between the PLA layer and the PVOH layer ac cording to the following arrangement:
A first layer of substantially PLA
A first tie layer containing at least 75% PLA and less than 25% PVOH, both components having similar MFI and melt viscosity
A second tie layer containing at least 75% PVOH and less than 25% PLA, both components having similar MFI and melt viscosity
A second layer of substantially PVOH having a lower MFI and a higher melt viscosity than the tie layers, the second layer providing strength and gas barrier properties to the multi-layer substrate

It can be seen from the foregoing description that by employing different grades of PVOH for the second layer and as a component of the at least one tie layer, the properties of the resulting multi-layer substrate may be improved.

A preferred optional feature of the invention is the addition of pelletised thermoplastic starches of different types into the blend used to produce the at least one tie layer. The rate of addition of pelletised thermoplastic starches is preferably up to 50% by weight more preferably up to 25% by weight of the PVOH component of the tie layer(s). The addition of such pelletised starches into the blend is beneficial for the following reasons:
1. The renewable resource content of the multi-layer structure is increased.
2. The manufacturing cost of the multi-layer structure is reduced.
3. The homogeneity of the tie layer blends is improved.
4. The pelletised starch is able to plasticise the PVOH in the tie layer and increase its flexibility.
5. An improved rate of compostability.

The pelletised starch is preferably produced from powdered native starch such as potato, tapioca, waxy maize or pea and plasticisers such as polyol based plasticisers but these types of powdered native starches and plasticisers are not limiting. In certain manufacturing processes, powdered native starches can be directly incorporated.

A further preferred optional feature of this invention is the incorporation of other biodegradable polymers into the multi-layer substrate without significant loss of transparency. In this context, transparent substrates are defined as those having a haze of less than 5%. It will be evident that this is of particular interest when the physical properties of the multi-layer substrate can be enhanced. For example, thermoplastic starch can be beneficially incorporated, either separately or as a combined pellet, within the high MFI / low melt viscosity component(s) of the tie layer(s), thereby reducing the brittleness of the tie layer due to improved plasticization, making the multi-layer substrate softer & more extensible. We have also found that the addition of higher melt temperature biodegradable polymers such as those based upon cellulose, cellulose derivatives, polyhydroxyalkanoates (PHA), polyhydroxybutyrates (PHB), and/or polyhydroxybutyrates co hydroxyvalerates (PHBV) (although this list is not limiting) can be beneficially incorporated within a substantially PLA outer layer or within the tie layer adjacent the said substantially PLA outer layer or more preferably into both as the effectiveness of the tie layer is enhanced when the same grades of the same polymers are present in the substantially PLA outer layer and the PLA component of the adjacent tie layer. However, the contrary is true of the PVOH components of the inner layer and the tie layer adjacent the inner layer where we have shown that the two grades of PVOH need to be different.

In another preferred optional feature of the invention, proprietary polymer modifiers can be beneficially incorporated into the substantially PLA outer layers & into tie layers containing between 75% PLA/25% PVOH and 25% PLA/75%PVOH within which range the incompatibility of the two polymers becomes more evident. Suitably selected polymer modifiers provide improved processing properties and a reduction of brittleness & stress whitening. However, it is preferred that the incorporation of any such additive neither prevents the multi-layer substrate from meeting internationally established standards of biodegradability & compostability such as ASTM-6400-99 in USA and EN13432 in Europe, nor significantly detracts from the transparency of the multi-layer substrate in order to ensure that converted products do not lose either of these important characteristics. Such a polymer modifier is SUKANO® PLA im S550 although incorporation of this polymer modifier is by no means limiting.

In a further preferred optional feature of this invention, the composition of the two outer layers of the multi-layer substrate is deliberately differentiated in order to obtain improved heat sealing properties and seals offering improved peelability respectively.

In vertical and horizontal form-fill-seal packaging machines, the packaging substrate is often sealed by heat using controlled temperature sealing jaws but may also be sealed by other methods including impulse sealing and RF welding although these sealing methods are by no means limiting. During the packing process, the substrate is formed into a tube which is then sealed along the machine direction using either a 'fin' seal or an 'overlap' type seal, then sealed transversely at one end, then filled and then sealed transversely at the other end thereby creating a filled pouch. By this means, the first outer layer is placed against itself during the two transverse sealing processes and during 'fin' sealing in the machine direction On the other hand, it is the second outer layer that is exposed to the heated jaws in the two transverse sealing processes and in the fin sealing process.

The parameters which influence the effective strength of the resulting heat seals are the temperature of the heated jaws, the pressure exerted by the heated jaws and the dwell time during which the heated jaws are held together. In order to obtain a robust heat seal between the two first outer layers, it is evidently necessary to expose the second outer layer to a higher temperature than the melt temperature of the first outer layer. Although the heated jaws may be Teflon® coated to prevent the second outer layer from sticking to the jaws, not all machines have Teflon® coated jaws. It is therefore preferable to find a solution where the second outer layer has a melt temperature higher than the first outer layer in order that the first outer layer melts to produce a robust heat seal whilst the second outer layer does not melt whilst in contact with the heated jaws. This is known as the "Delta-T effect" whereby the composition of the two outer layers in the multi-layer substrate is differentiated in order to produce a difference in melt temperature and thereby allow higher packing speeds as a result of increased jaw temperature and decreased dwell time.

We have discovered that this can be obtained without loss of transparency or biodegradability where the first layer of PLA is a first outer layer and the second layer of PVOH is an inner layer and a third layer consisting essentially of PLA is a second outer layer (with at least one tie layer between each outer layer and the inner layer), by the addition to the second PLA outer layer of higher melt temperature polymers such as cellulose, cellulose esters, PHA, PHB or PHBV based materials. Increasing the quantity of such higher melt temperature polymers may be continued until the PLA content of the second outer layer has been eliminated, always providing that the composition of the tie layer adjacent to the second outer layer is modified accordingly by the incorporation of a matched quantity of the same higher melt temperature polymer or polymers.

The same concept of differentiated outer layers can find further application in lidding films for PLA based biodegradable semi-rigid or rigid trays. In this application, it is advantageous for the consumer to be able to remove peelably the lidding film from the tray whilst the pack must not suffer any loss of seal integrity through the distribution chain as a consequence of creating a peelable seal. In this embodiment, the first outer layer is identified as that outer layer of the multi-layer substrate which is exposed to the contents of the tray, container or other substrate, and which is peelably sealed to the semi-rigid tray, container or substrate. The second outer layer is identified as that outer layer which is exposed to the heat source. We have found that the addition of higher melting point materials such as cellulose, cellulose esters, PHA, PHB, and/or PHBV based materials to the first outer layer produces a peelable seal. It has further been found that the degree of peelability is directly proportional to the quantity of cellulose, cellulose esters, PHA, PHB, and/or PHBV that are added to the first outer layer. This is the result of the partial lack of homogeneity between the PLA and the higher melting point materials which creates small "islands" of the higher melting point material within a "sea" of PLA. These "islands" of higher melting point material do not seal to the tray as well as the "sea" of PLA, thus weakening the seal and allowing the consumer to peel off the lidding film. The presence of higher melting point materials within the PLA means that seal integrity, whilst not endangered, is no longer continuous across the whole sealing area, thereby weakening the seal, and allowing it to be 'peeled'.

In a further embodiment of the invention, it has also been found that an effective peelable seal (for example when sealing to a PLA tray) can be obtained by including an additional peelably sealable layer outside the first outer layer of substantially PLA as may be seen in the following example:
Peelably sealable layer of PLA with addition of higher melting point materials such as cellulose, cellulose esters, PHA,PHB, and/or PHBV
A layer of substantially PLA
A tie layer containing a blend of PLA and PVOH, both components having similarly high MFI and low melt viscosity
An inner layer of substantially PVOH of low MFI and high melt viscosity providing strength and gas barrier properties to the multi-layer substrate
A tie layer containing a blend of PLA and PVOH, both components having similarly high MFI and low melt viscosity
A layer of substantially PLA

Additionally it has been found that both 'Delta T' and peelability can be obtained in the same multi-layer structure either by adding different amounts of the same higher melt temperature polymer to each of the outer layers, or by adding the same or different amounts of different higher melt temperature polymers to each of the outer layers.

The components of the tie layer blends are incorporated as separate pellets into a single screw extrusion process. Alternatively, some or all of the components can first be compounded into pellets in a twin screw extruder prior to being re-extruded in a single screw extruder. Whilst the latter process provides a more homogeneous blend, the advantages of the former process are that the components are subjected to less heat stress and hence less degradation, and changes in the blend are more easily and more quickly effected.

In another embodiment of the invention there is provided a biodegradable polymeric multi-layer substrate including a first layer of a polymeric material, a second layer of a polymeric material different to the polymeric material of the first layer, and at least one intermediate tie layer between the first and second layers, wherein the at least one tie layer comprises a mixture of the polymeric materials of the first and second layers and a starch or starch derivative in an amount of up to 50% by weight of the amount of one of the polymeric materials contained within the at least one tie layer.

Preferably the amounts of the polymeric materials of the first and second layers contained within the at least one tie layer are different.

The Physical Properties of different three-layer substrates of 45-50µm thickness produced at pilot scale together with measurements of their transparency, overall strength, and bond strength between layers are compared in the examples below. In each example of three-layer substrate shown below, the PLA and PVOH used to produce the outer layers and inner layer respectively, were identical. The PLA of the outer layers had a melt flow index (MFI) of between 4 and 8 g/10 min at 190°C and 2.16 kg, and a melt viscosity of 600 Pa-s at a shear rate of 500 sec⁻¹ at 190°C. The PVOH of the inner layer had a melt flow index (MFI) of between 1.4 - 1.9 g/10 min at 190°C and 2.16 kg, and a melt viscosity of 1500 Pa-s at a shear rate of 500 sec⁻¹ at 190°C. The tie layers were in accordance with the mixture of PLA and PVOH grade D of Example 1.

### EXAMPLE 2

| Substrate | Haze % | Gloss | Tensile Strength (Mpa) | Bond Strength (Mpa) |
|---|---|---|---|---|
| Natureworks® 2002D PLA mono-layer substrate | 4.6 | 80 | 60- 68 | n/a |
| Blown multi layer substrate (PLA/PVOH/PLA) without tie layers | 4 | 80 | Delaminates | 0 |
| Extrusion cast multi-layer substrate (PLA/PVOH/PLA) with tie layers according to this invention | 4 | 82 | 21 - 2G | 16-23 |
| Blown multi-layer substrate (PLA/PVOH/PLA) with tie layers according to this invention | 5 | 79 | 36 - 38 | 10-13 |

As can be seen, the tensile strength and bond strength of multi-layer substrates according to the invention are significantly improved compared to the same multi-layer substrates without tie layers.

## Claims

1. A biodegradable polymeric multi-layer substrate comprising a first layer of a polymeric material, a second layer of a polymeric material different to the polymeric material of the first layer, and at least one intermediate tie layer between the first and second layers, the at least one tie layer comprising a mixture of at least the polymeric materials adjacent the tie layer, **characterised in that** at least one of the polymeric materials within the tie layer has melt flow index and/or melt viscosity different from the melt flow index and/or melt viscosity of the same polymer(s) comprising one or other layer adjacent the tie layer.

2. A substrate according to claim 1 wherein the melt flow index and/or melt viscosity of said at least one of the polymeric materials within the tie layer approximates to the melt flow index and/or melt viscosity of another of the polymeric materials with the tie layer.

3. A substrate according to claim 1 or claim 2 which is transparent.

4. A substrate according to any preceding claim wherein the first layer is an outer layer substantially of PLA and the second layer is an inner layer substantially of PVOH and the at least one tie layer contains substantially PLA and PVOH, the PVOH of the at least one tie layer having a higher melt flow index and lower melt viscosity than the PVOH of the inner layer.

5. A substrate according to claim 4 further comprising a third layer of a polymeric material wherein the third layer is an outer layer substantially of PLA, wherein the inner layer substantially of PVOH is between the two outer layers.

6. A substrate according to claim 5 wherein the outer layers of substantially PLA have different melt point temperatures.

7. A substrate according to claim 5 or claim 6 wherein one outer layer of substantially PLA contains higher melting point polymers and wherein the tie layer adjacent the outer layer containing higher melting point polymers contains a matched proportion of higher melting point polymers.

8. A substrate according to claim 7 wherein a peelable sealable layer is provided over said one outer substantially PLA layer containing higher melt point polymers.

9. A substrate according to any preceding claim wherein the first layer comprises at least 90% by weight of PLA and wherein the second layer comprises at least 80% by weight of PVOH and wherein the at least one tie layer comprises from 90% to 10% by weight PLA and from 10% to 90% by weight PVOH.

10. A substrate according to any preceding claim wherein the at least one tie layer contains starch in an amount up to 50% by weight of the PVOH component.

11. A substrate according to claim 1 wherein the first layer is substantially PLA, the second layer is substantially PVOH, and the at least one intermediate tie layer between the first and second layers comprises substantially a mixture of PLA and PVOH, wherein the PVOH of the second layer has a melt flow index lower than the melt flow index of the PLA of the first layer and the PLA and PVOH components of the at least one tie layer each have a melt flow index equal to or greater than the melt flow index of the PLA of the first layer.

12. A substrate according to claim 11 wherein the PLA of the first layer has a melt flow index of 4 - 8 g/10min at 190°C and 2.16kg and the PVOH component of the at least one tie layer has a melt flow index of 5 - 9 g/10min, preferably 7.00 g/10min, at 190°C and 2.16kg.

13. A substrate according to claim 12 wherein the PLA of the first layer and the PLA component of the at least one tie layer have the same melt flow index.

14. A substrate according to claim 1 wherein the first layer is substantially PLA, the second layer is substantially PVOH, and the at least one intermediate tie layer between the first and second layers comprises substantially a mixture of PLA and PVOH, wherein the PVOH of the at least one tie layer has a higher melt flow index and a lower melt viscosity than the PVOH of the second layer.

15. A substrate according to claim 14 wherein the PVOH of the at least one tie layer has an MFI equal to or greater than the MFI of the PLA of the first layer and/or the PLA of the at least one tie layer has an MFI equal to or greater than the MFI of the PLA of the first layer.

## Patentansprüche

1. Bioabbaubares polymeres Mehrschichtsubstrat, eine erste Schicht aus einem polymeren Material, eine zweite Schicht aus einem polymeren Material, das sich von dem polymeren Material der ersten Schicht unterscheidet, und mindestens eine Zwischen-Verbindungsschicht zwischen den ersten und zweiten Schichten aufweisend, wobei die mindestens eine Verbindungsschicht eine Mischung aus zumindest den polymeren Materialien aufweist, die an die Verbindungsschicht angrenzen, **dadurch gekennzeichnet, dass** mindestens eines von den polymeren Materialien in der Verbindungsschicht einen Schmelzflussindex und/oder eine Schmelzviskosität aufweist, die sich von dem Schmelzflussindex und/oder der Schmelzviskosität des mindestens einen gleichen Polymers, aus dem die eine oder die andere an die Verbindungsschicht angrenzende Schicht besteht, unterscheidet bzw. unterscheiden.

2. Substrat nach Anspruch 1, wobei der Schmelzflussindex und/oder die Schmelzviskosität des mindestens einen von den polymeren Materialien innerhalb der Verbindungsschicht dem Schmelzflussindex und/oder der Schmelzviskosität eines anderen von den polymeren Materialien innerhalb der Verbindungsschicht ähnlich ist bzw. sind.

3. Substrat nach Anspruch 1 oder Anspruch 2, das transparent ist.

4. Substrat nach einem der vorangehenden Ansprüche, wobei die erste Schicht eine äußere Schicht ist, die im Wesentlichen aus PLA besteht, und die zweite Schicht eine innere Schicht ist, die im Wesentlichen aus PVOH besteht, und die mindestens eine Verbindungsschicht im Wesentlichen PLA und PVOH aufweist, wobei der PVOH der mindestens einen Verbindungsschicht einen höheren Schmelzflussindex und eine geringere Schmelzviskosität aufweist als der PVOH der inneren Schicht.

5. Substrat nach Anspruch 4, ferner eine dritte Schicht aus einem polymeren Material aufweisend, wobei die dritte Schicht eine äußere Schicht ist, die im Wesentlichen aus PLA besteht, wobei sich die innere Schicht, die im Wesentlichen aus PVOH besteht, zwischen den beiden äußeren Schichten befindet.

6. Substrat nach Anspruch 5, wobei die äußeren Schichten, die im Wesentlichen aus PLA bestehen, unterschiedliche Schmelzpunkttemperaturen aufweisen.

7. Substrat nach Anspruch 5 oder Anspruch 6, wobei eine äußere Schicht, die im Wesentlichen aus PLA besteht, höher schmelzende Polymere aufweist, und wobei die Verbindungsschicht, die an die äußere Schicht angrenzt, die höherschmelzende Polymere aufweist, einen abgestimmten Anteil an höherschmelzenden Polymeren aufweist.

8. Substrat nach Anspruch 7, wobei eine abziehbare, abdichtbare Schicht über der einen äußeren, im Wesentlichen aus PLA bestehenden Schicht vorgesehen ist, die höherschmelzende Polymere enthält.

9. Substrat nach einem der vorangehenden Ansprüche, wobei die erste Schicht mindestens 90 Gew.-% PLA aufweist, und wobei die zweite Schicht mindestens 80 Gew.-% PVOH aufweist, und wobei die mindestens eine Verbindungsschicht 90 bis 10 Gew.-% PLA und 10 bis 90 Gew.-% PVOH aufweist.

10. Substrat nach einem der vorangehenden Ansprüche, wobei die mindestens eine Verbindungsschicht Stärke in einer Menge von bis zu 50 Gew.-% der PVOH-Komponente aufweist.

11. Substrat nach Anspruch 1, wobei die erste Schicht im Wesentlichen aus PLA besteht, die zweite Schicht im Wesentlichen aus PVOH besteht, und die mindestens eine Zwischen-Verbindungsschicht zwischen den ersten und zweiten Schichten im Wesentlichen eine Mischung aus PLA und PVOH aufweist, wobei der PVOH der zweiten Schicht einen Schmelzflussindex aufweist, der niedriger ist als der Schmelzflussindex der PLA der ersten Schicht, und die PLA- und PVOH-Komponenten der mindestens einen Verbindungsschicht jeweils einen Schmelzflussindex aufweisen, der mindestens so hoch ist wie der Schmelzflussindex der PLA der ersten Schicht.

12. Substrat nach Anspruch 11, wobei die PLA der ersten Schicht einen Schmelzflussindex von 4 - 8 g / 10 min bei 190 °C und 2,16 kg aufweist, und die PVOH-Komponente der mindestens einen Verbindungsschicht einen Schmelzflussindex von 5 - 9 g / 10 min, vorzugsweise 7,00 g / 10 min, bei 190 °C und 2,16 kg aufweist.

13. Substrat nach Anspruch 12, wobei die PLA der ersten Schicht und die PLA-Komponente der mindestens einen Verbindungsschicht den gleichen Schmelzflussindex aufweisen.

14. Substrat nach Anspruch 1, wobei die erste Schicht im Wesentlichen aus PLA besteht, die zweite Schicht im Wesentlichen aus PVOH besteht, und die mindestens eine Zwischen-Verbindungsschicht zwischen den ersten und zweiten Schichten im Wesentlichen eine Mischung aus PLA und PVOH aufweist, wobei der PVOH der mindestens einen Verbindungsschicht einen höheren Schmelzflussindex und eine geringere Viskosität aufweist als der PVOH der zweiten Schicht.

15. Substrat nach Anspruch 14, wobei der PVOH der mindestens einen Verbindungsschicht einen MFI aufweist, der mindestens so hoch ist wie der MFI der PLA der ersten Schicht und/oder die PLA der mindestens einen Verbindungsschicht einen MFI aufweist, der mindestens so hoch ist wie der MFI der PLA der ersten Schicht.

## Revendications

1. Un substrat multicouche polymère biodégradable comprenant une première couche d'un matériau polymère, une deuxième couche d'un matériau polymère différent du matériau polymère de la première couche et au moins une couche de liaison intermédiaire entre les première et deuxième couches, la au moins une couche de liaison contenant un mélange d'au moins les matériaux polymères adjacents à la couche de liaison, **caractérisé en ce qu'**au moins un des matériaux polymères à l'intérieur de la couche de liaison possède un indice d'écoulement à l'état fondu et/ou une viscosité à l'état fondu différents de l'indice d'écoulement à l'état fondu et/ou de la viscosité à l'état fondu des mêmes polymères comprenant une ou une autre couche adjacente à la couche de liaison

2. Un substrat selon la Revendication 1 où l'indice d'écoulement à l'état fondu et/ou la viscosité à l'état fondu dudit au moins un des matériaux polymères à l'intérieur de la couche de liaison s'approche de l'indice d'écoulement à l'état fondu et/ou de la viscosité à l'état fondu d'un autre des matériaux polymères avec la couche de liaison.

3. Un substrat selon la Revendication 1 ou 2 qui e st transparent.

4. Un substrat selon l'une quelconque des Revendications précédentes où la première couche est une couche extérieure sensiblement de PLA et la deuxième couche est une couche intérieure sensiblement de PVOH et la au moins une couche de liaison contient sensiblement PLA et PVOH, le PVOH de la au moins une couche de liaison possédant un indice d'écoulement à l'état fondu plus élevé et une viscosité à l'état fondu plus faible que le PVOH de la couche intérieure.

5. Un substrat selon la Revendication 4 comprenant en outre une troisième couche d'un matériau polymère où la troisième couche est une couche extérieure sensiblement de PLA, où la couche intérieure sensiblement de PVOH se situe entre les deux couches extérieures.

6. Un substrat selon la Revendication 5 où les couches extérieures de sensiblement PLA possèdent des températures de point de fusion différentes.

7. Un substrat selon la Revendication 5 ou 6 où une couche extérieure de sensiblement PLA contient des polymères à point de fusion plus élevé et où la couche de liaison adjacente à la couche extérieure contenant des polymères à point de fusion plus élevé contient une proportion appariée de polymères à point de fusion plus élevé.

8. Un substrat selon la Revendication 7 où une couche pouvant être pelée et scellée est placée par dessus ladite une couche extérieure sensiblement PLA contenant des polymères à point de fusion plus élevé.

9. Un substrat selon l'une quelconque des Revendications précédentes où la première couche contient au moins 90% en poids de PLA et où la deuxième couche contient au moins 80% en poids de PVOH et où la au moins une couche de liaison contient de 90% à 10% en poids de PLA et de 10% à 90% en poids de PVOH.

10. Un substrat selon l'une quelconque des Revendications précédentes où la au moins une couche de liaison contient de l'amidon dans une quantité pouvant atteindre 50% en poids du composant PVOH.

11. Un substrat selon la Revendication 1 où la première couche est sensiblement PLA, la deuxième couche est sensiblement PVOH et la au moins une couche de liaison intermédiaire entre les première et deuxième couches comprend sensiblement un mélange de PLA et de PVOH, où le PVOH de la deuxième couche possède un indice d'écoulement à l'état fondu plus faible que l'indice d'écoulement à l'état fondu du PLA de la première couche et les composants PLA et PVOH de la au moins une couche de liaison possèdent chacun un indice d'écoulement à l'état fondu égal ou supérieur à l'indice d'écoulement à l'état fondu du PLA de la première couche.

12. Un substrat selon la Revendication 11 où le PLA de la première couche possède un indice d'écoulement à l'état fondu de 4 à 8 g/10 mn à 190°C et 2,16kg et le composant PVOH de la au moins une couche de liaison possède un indice d'écoulement à l'état fondu de 5 à 9 g/10 mn, de préférence 7,00 g/10 mn, à 190°C et 2,16kg.

13. Un substrat selon la Revendication 12 où le PLA de la première couche et le composant PLA de la au moins une couche de liaison possèdent le même indice d'écoulement à l'état fondu.

14. Un substrat selon la Revendication 1 où la première couche est sensiblement PLA, la deuxième couche est sensiblement PVOH et la au moins une couche de liaison intermédiaire entre les première et deuxième couches comprend sensiblement un mélange de PLA et de PVOH, où le PVOH de la au moins une couche de liaison possède un indice d'écoulement à l'état fondu plus élevé et une viscosité à l'état fondu plus faible que le PVOH de la deuxième couche.

15. Un substrat selon la Revendication 14 où le PVOH de la au moins une couche de liaison possède un MFI égal ou supérieur au MFI du PLA de la première couche et/ou le PLA de la au moins une couche de liaison possède un MFI égal ou supérieur au MFI du PLA de la première couche.
